# EUROPEAN PATENT APPLICATION

(11) **EP 4 825 709 A1**
(43) Date of publication of application: **21.10.2026**
(21) Application number: 26172765.5
(22) Date of filing: 16.04.2026
(51) Int. Cl.: B62D 25/14, B62D 25/08, B62D 29/00, B62D 65/02

(54) **VEHICLE FRONT STRUCTURE AND PANEL ASSEMBLY METHOD**

(30) Priority: 18.04.2025 JP 2025068472
(71) Applicant: Toyota Jidosha Kabushiki Kaisha, Toyota-shi, Aichi-ken 471-8571 (JP)
(72) Inventor: YAMAJI, Ken, TOYOTA-SHI, AICHI-KEN, 471-8571 (JP); TSURU, Michinobu, TOYOTA-SHI, AICHI-KEN, 471-8571 (JP)
(74) Representative: Cabinet Beau de Loménie

(57) **Abstract**

A vehicle front structure (100) is provided which includes a cross member (15) disposed between a power unit compartment (22) and a vehicle cabin (23), and extending in a vehicle width direction, a vertical wall (16) disposed upright on an upper part of the cross member (15), a dash panel (40) attached to the vertical wall (16), and partitioning the power unit compartment (22) and the vehicle cabin (23), and a guide (30) provided at an upper part of the cross member (15) and at a rear side in relation to the vertical wall (16). The guide (30) includes a protrusion (31) disposed with a gap (39), in which a lower end part (41) of the dash panel (40) can be disposed, between the guide (30) and the vertical wall (16).

## Description

### TECHNICAL FIELD

The present disclosure relates to a front structure of a vehicle including a dash panel which partitions between a power unit compartment at a front part of the vehicle and a vehicle cabin, and to a method of assembling the dash panel.

### BACKGROUND

JP H6-72354 A discloses a structure of a body having a dash panel which partitions between a power unit compartment at a front side of a vehicle and a vehicle cabin. The dash panel disclosed in JP H6-72354 A has grooves at a lower end and an upper end thereof. When the dash panel is assembled to the body, an adhesive is set in these grooves, an upper end of a floor panel and a lower end of a cowl top are respectively inserted into these grooves, and the dash panel is fixed on the body.

When the dash panel is assembled to the body, there is a problem in that positioning with respect to the body is difficult.

An advantage of the present disclosure lies in facilitating positioning of the dash panel with respect to the body.

### SUMMARY

According to one aspect of the present disclosure, there is provided a vehicle front structure comprising: a cross member that is disposed between a power unit compartment at a front part of a vehicle and a vehicle cabin, and that extends in a vehicle width direction; a vertical wall that is disposed upright at an upper part of the cross member; a dash panel that is attached to the vertical wall, and that partitions between the power unit compartment and the vehicle cabin; and a guide that is provided at an upper part of the cross member and at a rear side in relation to the vertical wall, wherein the guide includes a protrusion which is disposed with a gap, in which a lower end part of the dash panel can be disposed, between the guide and the vertical wall.

With the above-described configuration, the dash panel can be easily positioned in a front-and-rear direction with respect to the body by simply inserting the lower end part of the dash panel into the gap.

In the vehicle front structure of the present disclosure, a front surface of the protrusion may be a guide surface which opposes the vertical wall in a vehicle front-and-rear direction, and which is inclined in a slanted downward direction toward the vertical wall.

With the above-described configuration, the dash panel can be positioned in the front-and-rear direction with respect to the body by sliding the lower end part of the dash panel in the slanted downward direction toward the vertical wall while causing the lower end part of the dash panel to contact the guide surface. With this configuration, the dash panel can be easily positioned in the front-and-rear direction with respect to the body.

In the vehicle front structure of the present disclosure, the dash panel may comprise, at the lower end part, a recess into which the protrusion is fitted, and a depth dimension of the recess may be smaller than a height of the protrusion.

With the above-described configuration, the dash panel can be easily provisionally positioned in a left-and-right direction with respect to the body.

In the vehicle front structure of the present disclosure, the dash panel may comprise, at the lower end part, a recess into which the protrusion including the guide surface is fitted, and a depth dimension of the recess may be smaller than a height of a lower end of the guide surface.

With the above-described configuration, the guide surface may be fitted into the recess of the dash panel, and a bottom surface of the dash panel may be slid in the slanted downward direction toward the vertical wall while causing the bottom surface of the recess to contact the guide surface. Because of this, the dash panel may be positioned in the front-and-rear direction with respect to the body in a state in which the dash panel is provisionally positioned in the left-and-right direction with respect to the body.

In the vehicle front structure of the present disclosure, a top surface of the protrusion may be a provisional disposition surface which extends from an upper end of the guide surface toward a rear side, the provisional disposition surface may be fitted into the recess, and a height of the provisional disposition surface may be greater than a depth dimension of the recess.

With the above-described configuration, the bottom surface of the recess of the dash panel can be provisionally disposed on the provisional disposition surface, so that the dash panel can be easily provisionally positioned in the left-and-right direction with respect to the dash panel.

In the vehicle front structure of the present disclosure, the guide may include a front protrusion which is disposed between the protrusion and the vertical wall, and which is fitted into the recess, and a height of the front protrusion may be lower than a height of the protrusion, and greater than the depth dimension of the recess.

With the above-described configuration, the recess of the dash panel can be disposed between the vertical wall and the protrusion by fitting the recess of the dash panel into the front protrusion. Because of this, the dash panel can be easily provisionally positioned in the left-and-right direction with respect to the body, and can be easily positioned in the front-and-rear direction with respect to the body.

In the vehicle front structure of the present disclosure, the front protrusion may include a support surface which extends from the lower end of the guide surface toward the vertical wall, and which can support the recess of the dash panel between the vertical wall and the guide surface, and a height of the support surface may be equal to the height of the lower end of the guide surface.

With the above-described configuration, after the guide surface is fitted into the recess of the dash panel and the bottom surface of the recess is slid in the slanted downward direction toward the vertical wall while causing the bottom surface of the recess to contact the guide surface, the bottom surface of the recess of the dash panel can be supported by the support surface between the vertical wall and the guide surface. Because of this, the state in which the dash panel is provisionally positioned in the left-and-right direction with respect to the body and positioned in the front-and-rear direction with respect to the body can be easily retained.

In the vehicle front structure of the present disclosure, the protrusion may include left and right side surfaces which are inclined toward an outer side in the vehicle width direction toward a lower side, the front protrusion may include left and right front side surfaces which are respectively continuous with the left and right side surfaces, and the recess of the dash panel may be a notch of a trapezoidal shape into which the left and right side surfaces and the left and right front side surfaces are fitted.

With the above-described configuration, the precision of the provisional positioning in the left-and-right direction of the dash panel with respect to the body can be improved when the protrusion or the front protrusion is fitted into the recess of the dash panel.

The vehicle front structure of the present disclosure may further comprise: left and right side panels that are connected respectively to left and right end parts of the cross member; and left and right lateral walls that are disposed upright respectively on inner surfaces of the left and right side panels, a first positioning hole which defines a position in the vehicle width direction of the dash panel may be formed on the vertical wall, second positioning holes which define a position in a vehicle up-and-down direction of the dash panel may be formed respectively on the left and right side walls at upper parts thereof, the dash panel may comprise a first positioning pin which is disposed on the lower end part, and which is inserted into the first positioning hole, and left and right second positioning pins which are respectively disposed on left and right side end parts at upper parts thereof, and which are respectively inserted into the second positioning holes, and the first positioning hole may be an elongated hole which is long in the up-and-down direction and the second positioning holes may be elongated holes which are long in a left-and-right direction.

With the above-described configuration, the dash panel can be easily positioned in the left-and-right direction, and in the left-and-right direction with respect to the body.

In the vehicle front structure of the present disclosure, the cross member, the vertical wall, and the guide may be integrally cast.

With the above-described configuration, the dash panel can be easily positioned with respect to the body which is an integrally cast product.

According to another aspect of the present disclosure, there is provided a panel assembly method of assembling a dash panel which partitions a power unit compartment at a front part of a vehicle and a vehicle cabin to a front body comprising a cross member which is disposed between the power unit compartment and the vehicle cabin, and which extends in a vehicle width direction, a vertical wall which is disposed upright at an upper part of the cross member, and a guide which is provided at an upper part of the cross member and at a rear side in relation to the vertical wall, wherein the guide includes a protrusion which is disposed with a gap, in which a lower end part of the dash panel can be disposed, between the guide and the vertical wall, and the dash panel is positioned in a front-and-rear direction with respect to the front body by inserting the lower end part of the dash panel into the gap.

With the above-described configuration, the dash panel can be easily positioned in the front-and-rear direction with respect to the front body.

In the panel assembly method of the present disclosure, the dash panel may comprise, at the lower end part, a recess into which the protrusion can be fitted, a front surface of the protrusion may be a guide surface which opposes the vertical wall in a vehicle front-and-rear direction, which is inclined in a slanted downward direction toward the vertical wall, and which is fitted into the recess, a depth dimension of the recess may be smaller than a height of a lower end of the guide surface, the guide may include a front protrusion which is disposed between the protrusion and the vertical wall, and which is fitted into the recess, the front protrusion may include a support surface which extends from the lower end of the guide surface toward the vertical wall, and which can support the recess of the dash panel between the vertical wall and the guide surface, and a height of the support surface may be equal to the height of the lower end of the guide surface, and the dash panel may be positioned in the front-and-rear direction with respect to the front body by sliding a bottom surface of the recess in a slanted downward direction toward the vertical wall while causing the bottom surface of the recess to contact the guide surface in a state in which an upper end part of the dash panel is inclined rearward, and then supporting the bottom surface of the recess by the support surface.

With the above-described configuration, the dash panel can be easily provisionally positioned in a left-and-right direction with respect to the front body, and can be easily positioned in the front-and-rear direction with respect to the front body.

In the panel assembly method of the present disclosure, the dash panel may comprise a recess into which the protrusion is fitted, and the dash panel may be provisionally positioned in the left-and-right direction with respect to the front body by fitting the recess of the dash panel into the projection, and provisionally disposing a bottom surface of the recess of the dash panel on a top surface of the protrusion.

With the above-described configuration, the dash panel can be easily provisionally positioned in the left-and-right direction with respect to the front body.

In the panel assembly method of the present disclosure, the front body may further comprise left and right side panels which are respectively connected to left and right ends of the cross member, and left and right lateral walls which are disposed upright respectively on inner surfaces of the left and right side panels, a first positioning hole which defines a position in the vehicle width direction of the dash panel may be formed on the vertical wall, second positioning holes which define a position in a vehicle up-and-down direction of the dash panel may be formed respectively on the left and right lateral walls at upper parts thereof, the dash panel may comprise a first positioning pin which is disposed on the lower end part, and which is inserted into the first positioning hole, and left and right second positioning pins which are respectively disposed on left and right side end parts at upper parts thereof, and which are respectively inserted into the second positioning holes, the first positioning hole may be an elongated hole which is long in an up-and-down direction, and the second positioning holes may be elongated holes which are long in a left-and-right direction, the dash panel may be positioned in the left-and-right direction with respect to the front body by causing the bottom surface of the recess of the dash panel to contact the guide surface in a state in which an upper end part of the dash panel is inclined rearward, sliding the dash panel in a slanted downward direction toward the vertical wall, and inserting the first positioning pin into the first positioning hole, the dash panel may then be positioned in the front-and-rear direction with respect to the front body by supporting the bottom surface of the recess by the support surface, and the dash panel may then be positioned in the up-and-down direction with respect to the front body by raising the upper end part of the dash panel toward the lateral wall in a state in which the bottom surface of the recess is supported by the support surface, and inserting the left and right second positioning pins respectively into the second positioning holes.

With the above-described configuration, the dash panel can be easily positioned in the front-and-rear direction, in the left-and-right direction, and in the up-and-down direction with respect to the front body.

According to an alternative configuration of the present disclosure, there is provided a vehicle front structure comprising: a cross member that is disposed between a power unit compartment at a front part of a vehicle and a vehicle cabin, and that extends in a vehicle width direction; a vertical wall that is disposed upright at an upper part of the cross member; a dash panel that is attached to the vertical wall and that partitions between the power unit compartment and the vehicle cabin; and a projection provided at an upper part of the cross member and at a rear side in relation to the vertical wall, wherein the dash panel has, at a lower end part, a recess which is fitted into the projection with a bottom surface thereof contacting a top surface of the projection.

With the above-described configuration, the dash panel can be easily positioned in the left-and-right direction with respect to the front body.

According to an alternative configuration of the present disclosure, there is provided a panel assembly method of assembling a dash panel which partitions a power unit compartment at a front part of a vehicle and a vehicle cabin to a front body comprising a cross member which is disposed between the power unit compartment and the vehicle cabin, and which extends in a vehicle width direction, a vertical wall which is disposed upright at an upper part of the cross member, and a projection which is provided at an upper part of the cross member and at a rear side in relation to the vertical wall, wherein the dash panel has, at a lower end part, a recess which is fitted into the projection with a bottom surface thereof contacting a top surface of the projection, the dash panel is positioned in a left-and-right direction with respect to the front body by fitting the recess of the dash panel into the projection and provisionally disposing the bottom surface of the recess of the dash panel on the top surface of the projection, and the dash panel is then assembled to the vertical wall by sliding the dash panel toward a front side along the top surface of the projection.

With the above-described configuration, the dash panel can be assembled to the front body in a state in which the dash panel is positioned in the left-and-right direction with respect to the front body.

According to an aspect of the present disclosure, the dash panel can be easily positioned with respect to a body.

### BRIEF DESCRIPTION OF DRAWINGS

Embodiment(s) of the present disclosure will be described based on the following figures, wherein:
FIG. 1 is a perspective diagram of a vehicle front structure according to a first embodiment of the present disclosure;
FIG. 2 is a perspective diagram of a front body of the vehicle front structure shown in FIG. 1;
FIG. 3 is a perspective diagram of a dash panel of the vehicle front structure shown in FIG. 1;
FIG. 4 is a schematic perspective diagram of details of an A part in FIG. 1;
FIG. 5 is a perspective diagram of a guide of the vehicle front structure shown in FIG. 1;
FIG. 6 is a schematic elevation view showing a recess of the dash panel of the vehicle front structure shown in FIG. 1;
FIG. 7 is a schematic elevation view of the vehicle front structure shown in FIG. 1, viewing an upper left portion and a lower center portion of the vehicle front structure from a rear side of the vehicle;
FIG. 8 is a cross-sectional diagram along a line B-B of FIG. 7;
FIG. 9A is a schematic cross-sectional diagram showing an assembly process for assembling the dash panel to the front body in the vehicle front structure shown in FIG. 1, showing a state in which the dash panel is lifted and disposed above a protrusion of the guide;
FIG. 9B is a schematic elevation view showing the assembly process for assembling the dash panel to the front body, viewing a lower center portion of the front body and a lower center portion of the dash panel in the state shown in FIG. 9A from a rear side of the vehicle;
FIG. 10A is a schematic cross-sectional diagram showing the assembly process for assembling the dash panel to the front body in the vehicle front structure of FIG. 1, showing a state in which a bottom surface of the recess of the dash panel is provisionally disposed on a top surface of the protrusion of the guide;
FIG. 10B is a schematic elevation view showing the assembly process for assembling the dash panel to the front body, viewing the lower center portion of the front body and the lower center portion of the dash panel in the state shown in FIG. 10A from a rear side of the vehicle;
FIG. 11A is a schematic cross-sectional diagram showing the assembly process for assembling the dash panel to the front body in the vehicle front structure shown in FIG. 1, showing a state of sliding the bottom surface of the recess in a slanted downward direction toward the vertical wall while causing the bottom surface of the recess to contact the guide surface in a state in which an upper end part of the dash panel is inclined rearward;
FIG. 11B is a schematic elevation view showing the assembly process for assembling the dash panel to the front body, viewing the lower center portion of the front body and the lower center portion of the dash panel in the state shown in FIG. 11A from a rear side of the vehicle;
FIG. 12A is a schematic cross-sectional diagram showing the assembly process for assembling the dash panel to the front body in the vehicle front structure shown in FIG. 1, showing positioning in a front-and-rear direction of the dash panel with respect to the front body;
FIG. 12B is a schematic elevation view showing the assembly process for assembling the dash panel to the front body, viewing the lower center portion of the front body and the lower center portion of the dash panel in the state shown in FIG. 12A from a rear side of the vehicle;
FIG. 13A is a schematic cross-sectional diagram showing the assembly process for assembling the dash panel to the front body, showing positioning in the up-and-down direction of the dash panel with respect to the front body;
FIG. 13B is a schematic elevation view showing the assembly process for assembling the dash panel to the front body, viewing upper left portions and lower center portions of the front body and the dash panel in the state shown in FIG. 13A from a rear side of the vehicle;
FIG. 14A is a schematic cross-sectional diagram showing the assembly process for assembling the dash panel to the front body in the vehicle front structure of FIG. 1, showing a state in which the positioning of the dash panel with respect to the front body is completed;
FIG. 14B is a schematic elevation view showing the assembly process for assembling the dash panel to the front body, viewing the upper left portions and the lower center portions of the front body and the dash panel in the state shown in FIG. 14A from a rear side of the vehicle;
FIG. 15 is a schematic perspective diagram showing center portions of a cross member and a dash panel, and a guide of a vehicle front structure according to a second embodiment of the present disclosure;
FIG. 16A is a schematic cross-sectional diagram showing positioning in a front-and-rear direction of the dash panel with respect to the front body in the vehicle front structure shown in FIG. 15, showing a state in which a lower end part of the dash panel is slid in a slanted downward direction toward a vertical wall while causing the lower end part to contact a guide surface in a state in which an upper end part of the dash panel is inclined rearward;
FIG. 16B is a schematic cross-sectional diagram showing positioning in the front-and-rear direction of the dash panel with respect to the front body in the vehicle front structure shown in FIG. 15, showing a state in which the lower end part is inserted into a gap in a state in which the upper end part of the dash panel is inclined rearward, and the lower end part is caused to contact an upper surface of the cross member;
FIG. 16C is a schematic cross-sectional diagram showing a state in which the positioning in the front-and-rear direction of the dash panel with respect to the front body is completed in the vehicle front structure shown in FIG. 15;
FIG. 17 is a schematic perspective diagram showing center portions of a cross member and a dash panel, and a guide of a vehicle front structure according to an alternative configuration of the present disclosure;
FIG. 18A is a schematic cross-sectional diagram showing an assembly process for assembling the dash panel to a front body in the vehicle front structure shown in FIG. 17, showing a state in which a bottom surface of a recess of the dash panel is provisionally disposed on a top surface of a protrusion of the guide;
FIG. 18B is a schematic elevation view showing the assembly process for assembling the dash panel to the front body, viewing a lower center portion of the front body and a lower center portion of the dash panel in the state shown in FIG. 18A from a rear side of the vehicle; and
FIG. 19 is a schematic cross-sectional diagram showing the assembly process for assembling the dash panel to the front body in the vehicle front structure shown in FIG. 17, showing a state in which the positioning of the dash panel with respect to the front body is completed.

### DESCRIPTION OF EMBODIMENTS

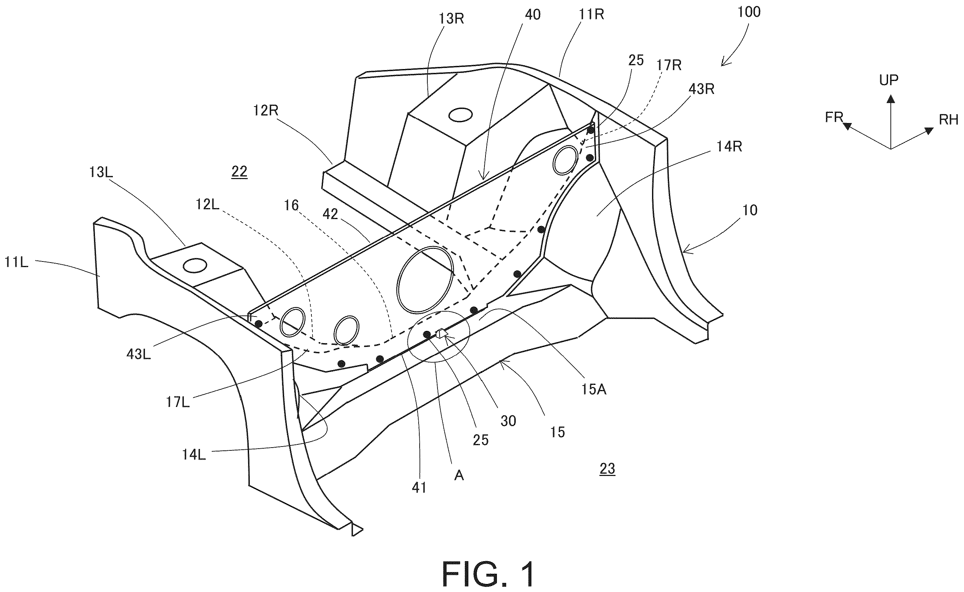

A vehicle front structure 100 according to a first embodiment of the present disclosure will now be described with reference to the drawings. As shown in FIG. 1, the vehicle front structure 100 comprises a front body 10 and a dash panel 40. "FR", "UP", and "RH" shown in the figures respectively indicate a front side, an upper side, and a right side of the vehicle front structure 100. Directions opposite from FR, UP, and RH respectively indicate a rear side, a lower side, and a left side. In the following description, unless otherwise noted, when the description refers to the directions of front and rear, left and right, and upper and lower sides, these descriptions refer to the directions of the front and rear, the left and right, and the upper and lower sides of the vehicle front structure 100.

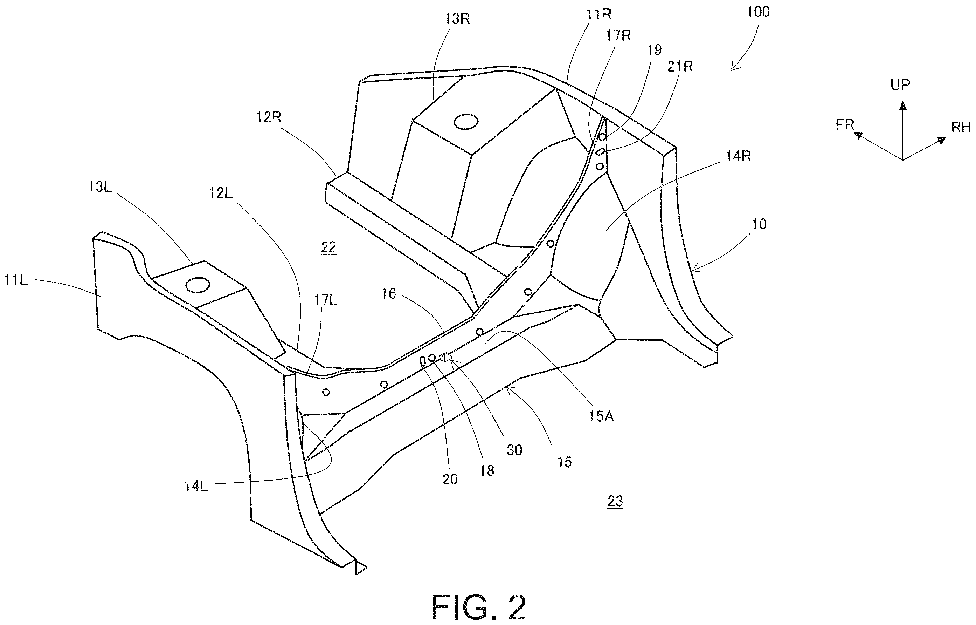

As shown in FIG. 2, the front body 10 comprises left and right front side members 12L and 12R, left and right side panels 11L and 11R, left and right wheel wells 14L and 14R, a cross member 15, a vertical wall 16, left and right lateral walls 17L and 17R, and a guide 30.

The left and right front side members 12L and 12R are frame members disposed respectively at the left and right sides of the vehicle front part, and extending in a vehicle front-and-rear direction. At outer sides in a vehicle width direction of the left and right front side members 12L and 12R, the left and right wheel wells 14L and 14R, and left and right suspension towers 13L and 13R are respectively connected. At outer sides in the vehicle width direction of the left and right suspension towers 13L and 13R and at outer sides in the vehicle width direction of the left and right wheel wells 14L and 14R, the left and right side panels 11L and 11R are respectively connected. At outer sides in the vehicle width direction of the left and right side panels 11L and 11R, design panels (not shown) of the vehicle are respectively attached.

The cross member 15 is a frame member connecting between the left and right side panels 11L and 11R, and the left and right front side members 12L and 12R. Left and right ends of the cross member 15 are connected respectively to the left and right side panels 11L and 11R via the left and right wheel wells 14L and 14R. The cross member 15 may have, for example, a groove-shaped cross section, opened at the lower side. The vertical wall 16 is disposed upright on an upper surface 15A of the cross member 15. In addition, the left and right lateral walls 17L and 17R provided upright toward an inner side in the vehicle width direction are provided respectively on inner surfaces of the left and right side panels 111 and 11R and the left and right wheel wells 14L and 14R. The vertical wall 16 and the left and right lateral walls 17L and 17R are continuous in the vehicle width direction.

A plurality of bolt holes 18 for attaching the dash panel 40 are formed on the vertical wall 16. Similarly, a plurality of bolt holes 19 for attaching the dash panel 40 are formed on the left and right lateral walls 17L and 17R. A first positioning hole 20 for defining a position in the vehicle width direction of the dash panel 40 with respect to the front body 10 is formed in a region near a center in the vehicle width direction of the vertical wall 16. The first positioning hole is an elongated hole which is long in the vertical direction. Left and right second positioning holes 21L and 21R for defining a position in a vehicle up-and-down direction of the dash panel 40 with respect to the front body 10 are formed respectively on upper parts of the left and right lateral walls 17L and 17R. The second positioning holes 21L and 21R are elongated holes which are long in the left-and-right direction.

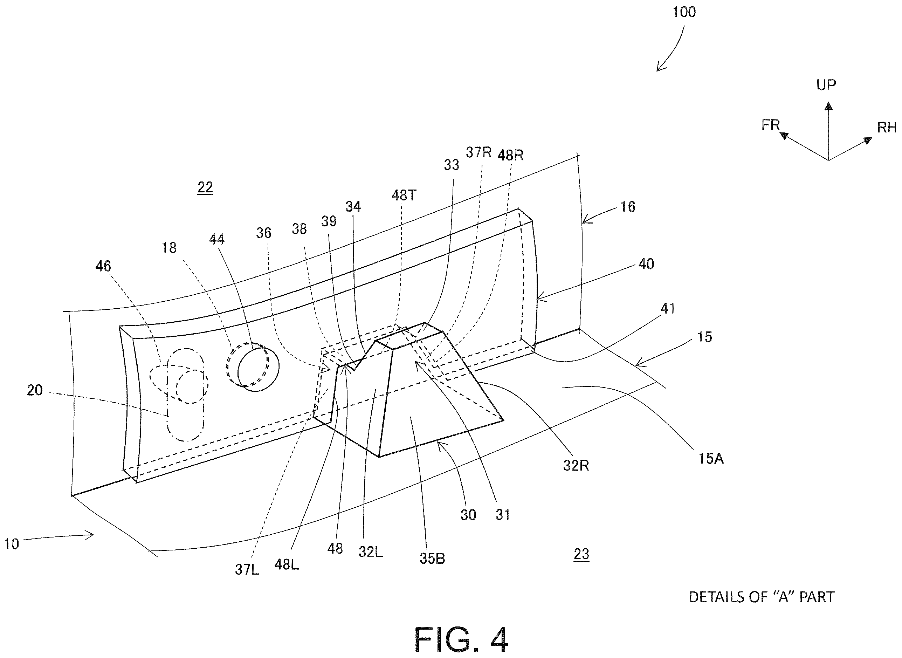

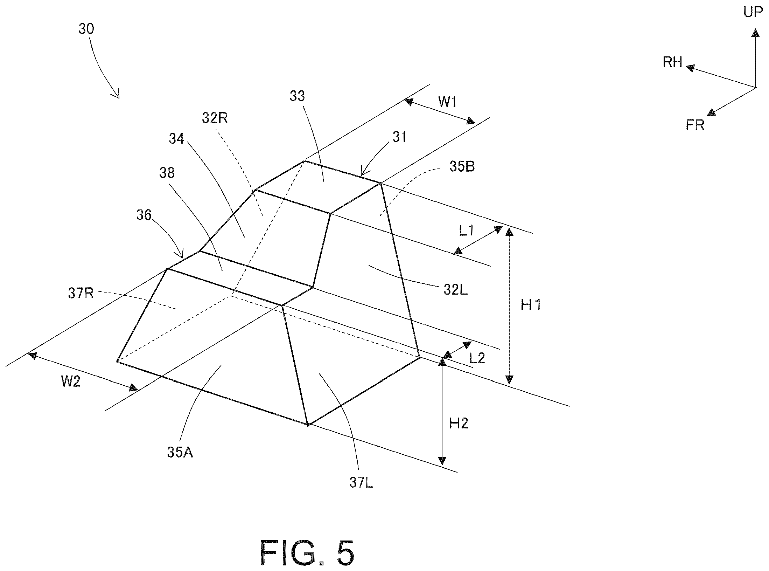

The guide 30 for positioning when the dash panel 40 is attached is provided in a region near a center in the vehicle width direction of the upper surface 15A of the cross member 15. A structure of the guide 30 will be described later with reference to FIGs. 4 and 5.

The left and right front side members 12L and 12L, the left and right side panels 11L and 11R, the left and right wheel wells 14L and 14R, the cross member 15, the vertical wall 16, the left and right lateral walls 17L and 17R, and the guide 30 described above are cast products which are integrally cast from a metal such as aluminum.

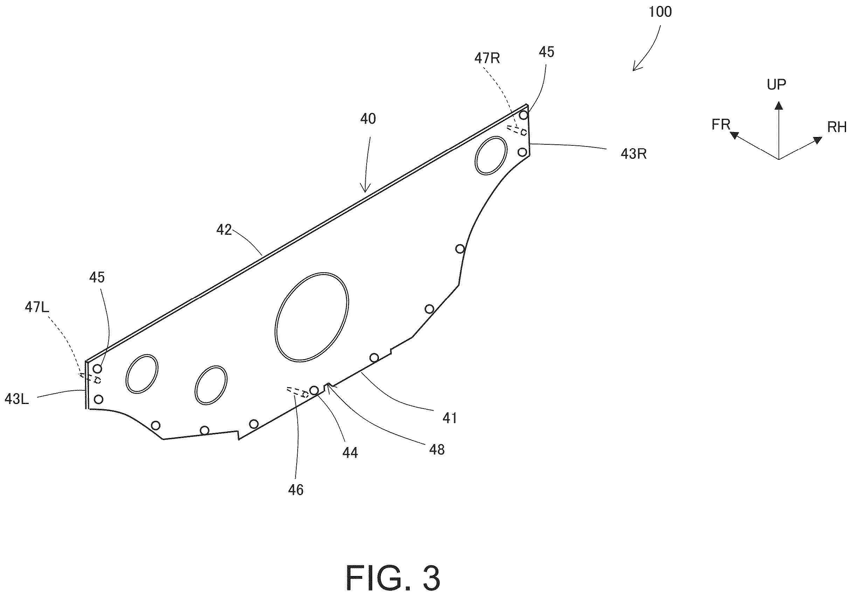

As shown in FIG. 3, the dash panel 40 comprises a lower end part 41, an upper end part 42, and left and right side wall parts 43L and 43R. The dash panel 40 is a plate member made of a resin. A plurality of bolt holes 44 are formed on the lower end part 41, and a plurality of bolt holes 45 are formed on the left and right side end parts 43L and 43R. A first positioning pin 46 and a recess 48 are provided in a region near a center in the vehicle width direction of the lower end part 41. The bolt holes 45 and left and right second positioning pins 47L and 47R are respectively provided on the left and right side end parts 43L and 43R.

The bolt hole 44 of the lower end part 41 is formed at a position corresponding to the bolt hole 18 formed on the vertical wall 16. In addition, the bolt holes 45 formed on the left and right side end parts 43L and 43R are formed at positions respectively corresponding to the bolt holes 19 formed on the left and right lateral walls 17L and 17R. Similarly, the first positioning pin 46 is disposed at a position corresponding to the first positioning hole 20 formed on the vertical wall 16, and the left and right second positioning pins 47L and 47R are disposed at positions respectively corresponding to the left and right second positioning holes 21L and 21R respectively formed on the left and right lateral walls 17L and 17R. The recess 48 is disposed at a position corresponding to the guide 30. Details of the recess 48 will be described later with reference to FIG. 4.

The first positioning pin 46 and the left and right second positioning pins 47L and 47R have a tapered shape with respective diameters reduced toward tips thereof, and are resin molded integrally with other portions of the dash panel 40.

As shown in FIG. 1, the dash panel 40 is attached to the vertical wall 16 and the left and right lateral walls 17L and 17R by a plurality of bolts 25. When the dash panel 40 is attached to the vertical wall 16 and the left and right lateral walls 17L and 17R, the left and right side panels 11L and 11R of the front body 10, and the dash panel 40 partition a power unit compartment 22 at a front side of the vehicle. A region at a vehicle rear side of the dash panel 40 serves as a vehicle cabin. The power unit compartment 22 is equipped with a vehicle driving motor, a power control device, an air conditioning unit, or the like. The vehicle cabin 23 is a space in which passengers ride.

As described, the dash panel 40 is a plate member that partitions between the power unit compartment 22 at the vehicle front part and the vehicle cabin 23. Similarly, the cross member 15 is a frame member disposed between the power unit compartment 22 and the vehicle cabin 23, and extending in the vehicle width direction.

Next, the guide 30 will be described with reference to FIGs. 4 and 5. As shown in FIGs. 4 and 5, the guide 30 is provided on the upper surface 15A of the cross member 15, at a rear side in relation to the vertical wall 16, and comprises a protrusion 31 and a front protrusion 36.

The protrusion 31 comprises left and right side surfaces 32L and 32R, a top surface 33, a rear surface 35B, and a front surface 34. The protrusion 31 is a portion of a trapezoidal cross-sectional shape in which the left and right side surfaces 32L and 32R are inclined toward the outer side in the vehicle width direction toward the lower side. A width of the top surface 33 is W1, a height of the top surface 33 is H1, and a length in the vehicle front-and-rear direction of the top surface 33 is L1. The top surface 33 is a surface which extends from an upper end of the front surface 34 toward the rear side, and is a provisional disposition surface on which the recess 48 of the dash panel 40 to be described later can be provisionally disposed. The front surface 34 is a guide surface which opposes the vertical wall 16 in the vehicle front-and-rear direction, and which is inclined in a slanted downward direction toward the vertical wall 16. An angle of the front surface 34 may be freely set, and may be set, for example, in a range of about 45° to about 60°.

The front protrusion 36 comprises left and right front side surfaces 37L and 37R, a front top surface 38, and a front end surface 35A, and is a portion of a trapezoidal cross-sectional shape disposed between the protrusion 31 and the vertical wall 16. The front protrusion 36 is integrally cast with the protrusion 31. The left and right front side surfaces 37L and 37R are inclined toward the outer side in the vehicle width direction toward the lower side, and are continuous surfaces respectively with the left and right side surfaces 32L and 32R of the protrusion 31. The front end surface 35A of the front protrusion 36 is connected to the vertical wall 16. The front top surface 38 has a height H2 which is lower than the height H1 of the top surface 33 of the protrusion 31, and is a surface extending from a lower end of the front surface 34 of the protrusion 31 toward the front side to the vertical wall 16. A width of the front top surface 38 is W2 which is wider than the width W1 of the top surface 33, and a length in the vehicle front-and-rear direction of the front top surface 38 is L2. The length L2 is a length of a gap 39 between the lower end of the front surface 34 of the protrusion 31 and the vertical wall 16. Therefore, the protrusion 31 is disposed with the gap 39 of the length L2 between the protrusion 31 and the vertical wall 16. It is sufficient that the length L2 is a length which allows insertion of the lower end part 41 of the dash panel 40 including the recess 48, and may be, for example, equal to a thickness of the lower end part 41, or slightly longer than the thickness of the lower end part 41. The front top surface 38 is a support surface which supports the recess 48 of the dash panel 40 to be described later.

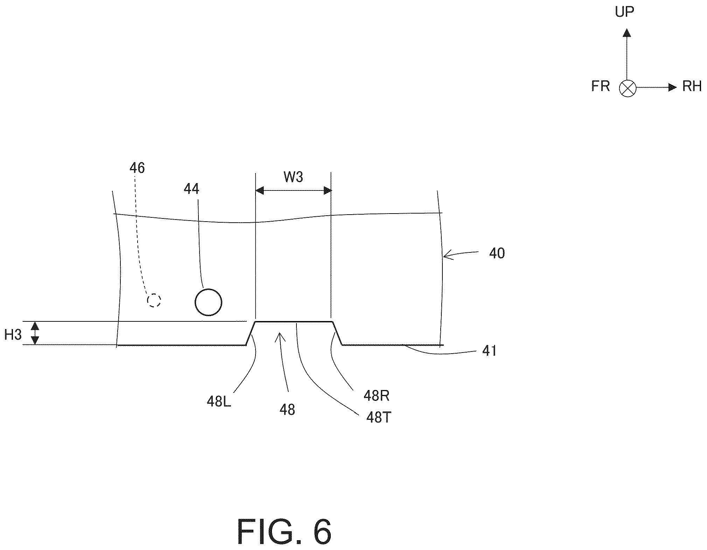

Next, with reference to FIG. 6, the recess 48 provided at the lower end part 41 of the dash panel 40 will be described. The recess 48 is a notch of a trapezoidal shape, and comprises left and right side surfaces 48L and 48R, and a bottom surface 48T. A width of the bottom surface 48T is W3. The width W3 is greater than the width W1 of the top surface 33 of the protrusion 31 of the guide 30, and is equal to the width W2 of the front top surface 38 of the front protrusion 36, or slightly longer than the width W2.
Inclination angles of the left and right side surfaces 47L and 47R are respectively equal to or slightly less steep than inclination angles of the left and right side surfaces 32L and 32R and the left and right front side surfaces 37L and 37R of the guide 30. A depth dimension of the recess 48 is H3. The depth dimension H3 is smaller than the height H1 of the top surface 33 of the protrusion 31, and is also smaller than the height H2 of the front top surface 38 of the front protrusion 36. A thickness of the lower end part 41 of the dash panel 40 including the recess 48 is equal to the length L2 in the vehicle front-and-rear direction of the front top surface 38 of the guide 30, or slightly thinner than the length L2.

As described, the width W3 of the recess 48 of the dash panel 40 is greater than the width W1 of the top surface 33 of the protrusion 31 of the guide 30, and is equal to the width W2 of the front top surface 38 of the front protrusion 36 of the guide 30, or longer than the width W2. The thickness of the lower end part 41 of the dash panel 40 including the recess 48 is equal to the length L2 between the lower end of the front top surface 38 of the guide 30 and the vertical wall 16, or slightly thinner than the length L2. The depth dimension H3 of the recess 48 is smaller than the height H1 of the top surface 33 of the protrusion 31, and is also smaller than the height H2 of the front top surface 38 of the front protrusion 36. Because of this, the protrusion 31 and the front protrusion 36 of the guide 30 can be fitted into the recess 48. In addition, the bottom surface 48T of the recess 48 can be supported with the front top surface 38 of the guide 30, and the recess 48 can be inserted to the gap between the vertical wall 16 and the lower end of the front top surface 38.

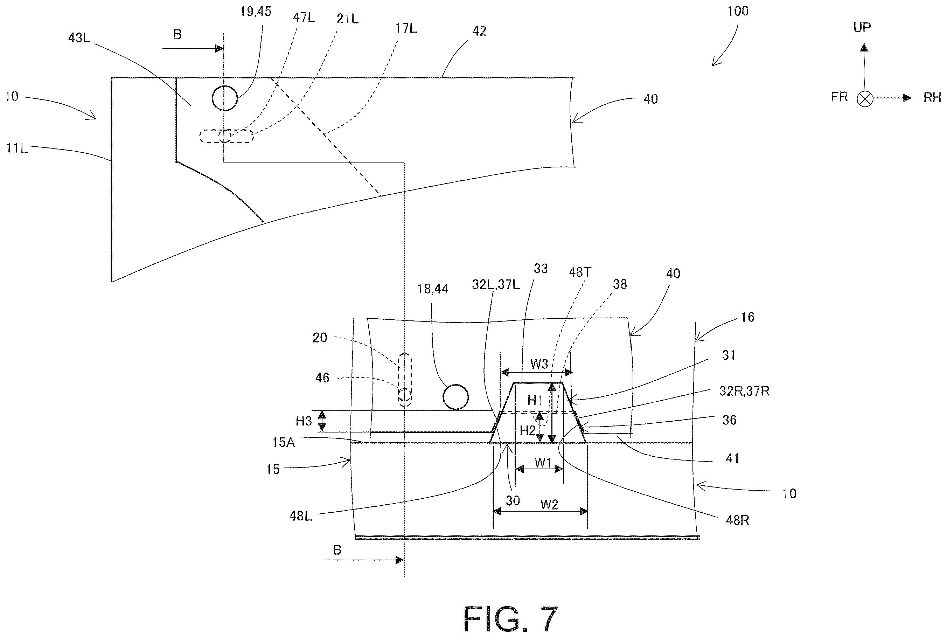

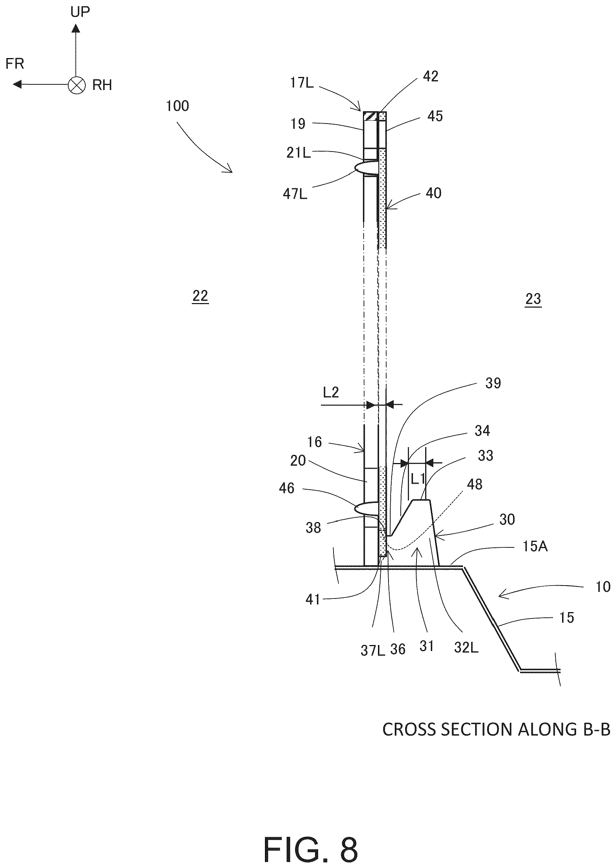

FIGs. 7 and 8 show a state in which the positioning of the dash panel 40 with respect to the front body 10 is completed. As shown in FIGs. 7 and 8, in the state in which the positioning of the dash panel 40 with respect to the front body 10 is completed, the recess 48 of the dash panel 40 is fitted into the front protrusion 36 of the guide 30, and the first positioning pin 46 is inserted into the first positioning hole 20 of the vertical wall 16. In addition, the left and right second positioning pins 47L and 47R are respectively inserted into the second positioning holes 21L and 21R of the left and right side end parts 43L and 43R of the dash panel 40. In the drawings, the right side end part 43R, the right second positioning pin 47R, and the right second positioning hole 21R are not shown, because these members are symmetric in the left-and-right direction with the left side end part 43L, the left second positioning pin 47L, and the left second positioning hole 21L. respectively.

From this state, the dash panel 40 is then assembled to the front body 10 by inserting the bolts 25 into the bolt holes 18, 19, 44, and 45.

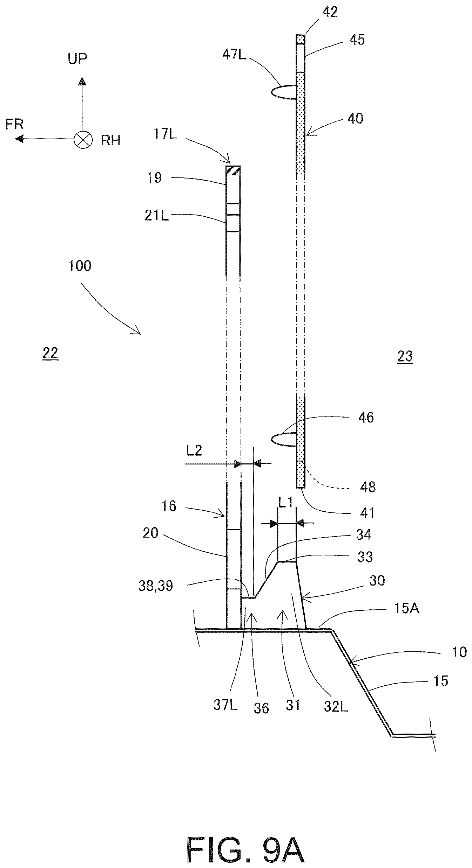

Next, an assembly process for assembling the dash panel 40 to the front body 10 will be described with reference to FIGs. 9A to 14B.

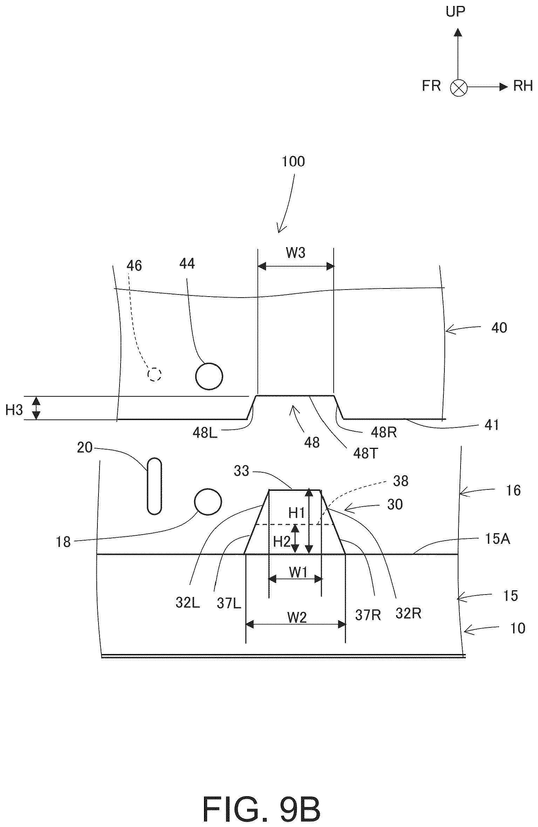

As shown in FIG. 9A, the dash panel 40 is lifted, and is disposed above the protrusion 31 of the guide 30. In this process, as shown in FIG. 9B, the positions of the respective members are adjusted such that a center position in the vehicle width direction of the recess 48 of the dash panel 40 approximately coincides with a center position in the vehicle width direction of the protrusion 31.

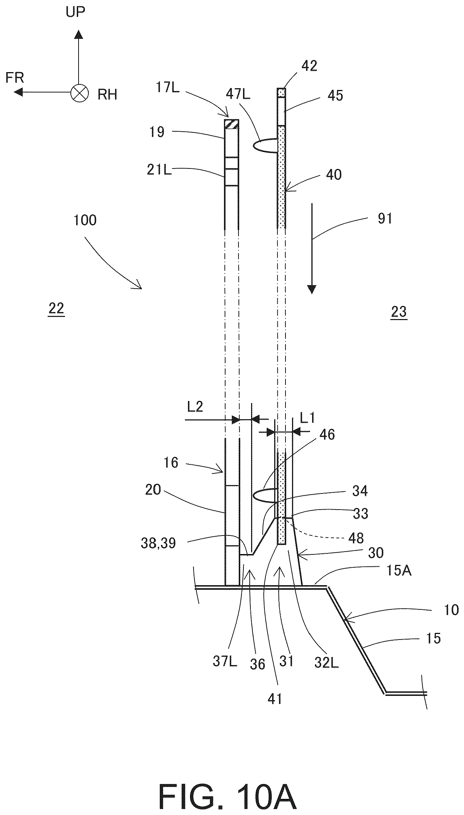

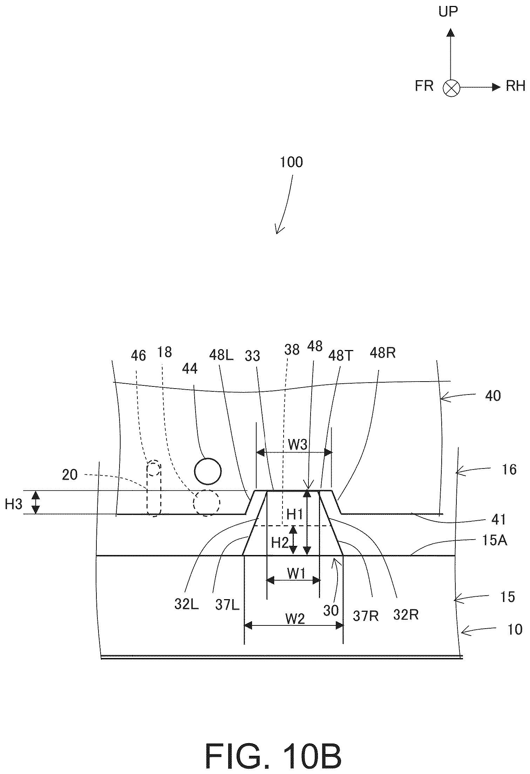

As already described above, the width W3 of the recess 48 of the dash panel 40 is greater than the width W1 of the top surface 33 of the protrusion 31 of the guide 30. Thus, as shown by an arrow 91 in FIG. 10A, the recess 48 can be fitted into the protrusion 31, as shown in FIG. 10B, by lowering the dash panel 40. The bottom surface 48T of the recess 48 is provisionally disposed on the top surface (provisional disposition surface) 33 of the protrusion 31, to provisionally position the dash panel 40 in the left-and-right direction with respect to the front body 10. As shown in FIG. 10B, in the state in which the bottom surface 48T is provisionally disposed on the top surface 33, gaps are present respectively between the left and right side surfaces 32L and 32R of the protrusion 31 and the left and right side surfaces 48L and 48R of the recess 48.

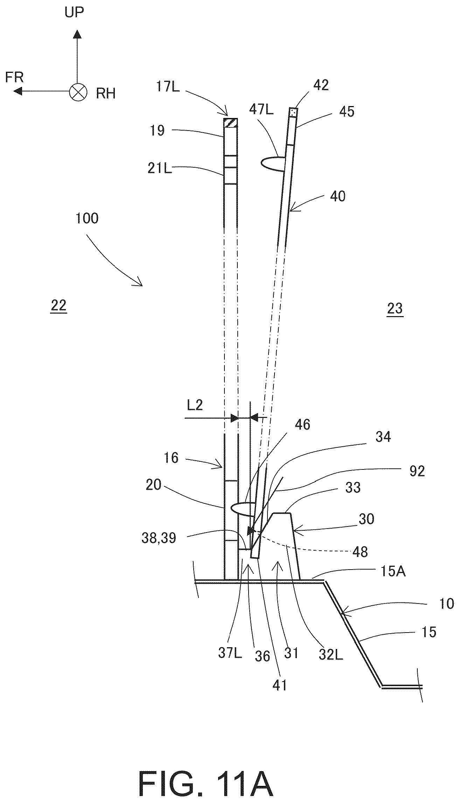

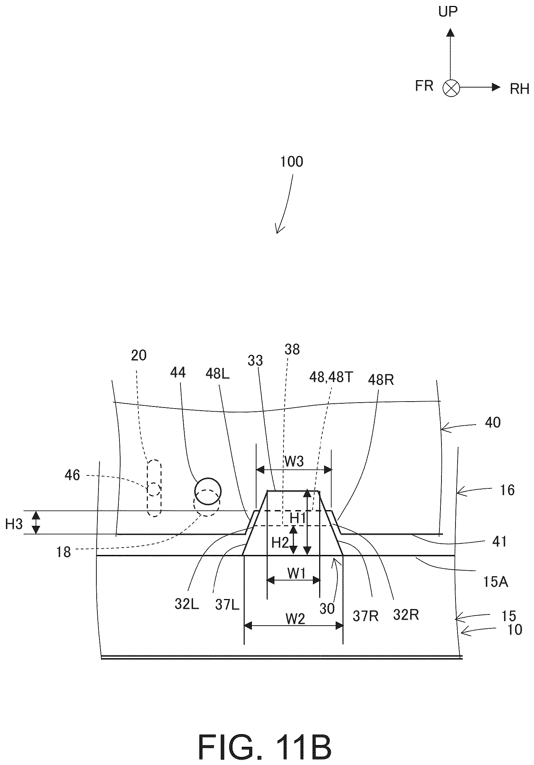

Next, as shown by an arrow 92 in FIG. 11A, in a state in which the upper end part 42 of the dash panel 40 is inclined rearward, the bottom surface 48T of the recess 48 is slid in a slanted downward direction toward the vertical wall 16 while causing the bottom surface 48T to contact the front surface (guide surface) 34 of the protrusion 31. In this process, as shown in FIG. 11B, the gaps between the left and right side surfaces 48L and 48L of the recess 48 and the left and right side surfaces 32L and 32R of the protrusion 31 gradually become smaller. Because of this, as the dash panel 40 is slid in the slanted downward direction, the center of the recess 48 becomes close to coincide with the center of the protrusion 31. In addition, when the dash panel 40 is slid in the slanted downward direction, a tip of the first positioning pin 46 having the tapered shape and provided on the lower end part 41 of the dash panel 40 enters the first positioning hole 20 of the vertical wall 16.

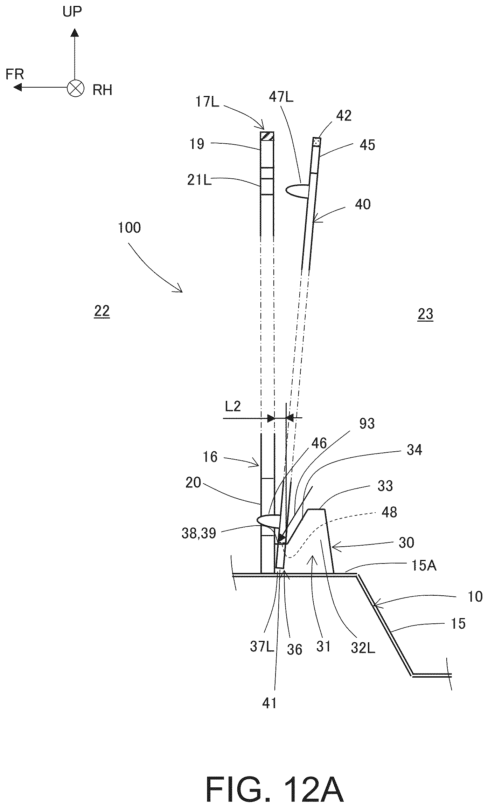

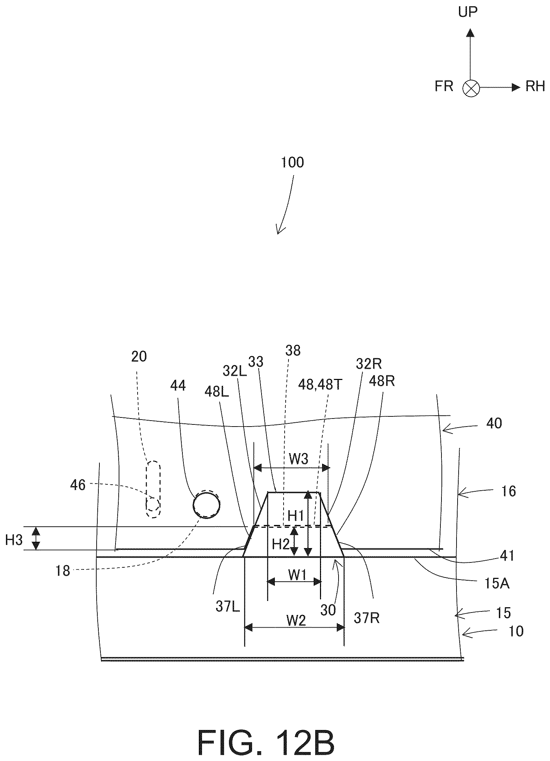

As already described above, the width W3 of the recess 48 of the dash panel 40 is equal to the width W2 of the front top surface (support surface) 38 of the front protrusion 36 of the guide 30, or longer than the width W2. Because of this, as shown by an arrow 93 in FIG. 12A, as the dash panel 40 is further slid in the slanted downward direction, the recess 48 is fitted into the front protrusion 36 of the guide 30. The depth dimension H3 of the recess 48 is smaller than the height H2 of the front top surface (support surface) 38 of the front protrusion 36, and the thickness of the recess 48 is equal to the length L2 between the protrusion 31 and the vertical wall 16, or slightly thinner than the length L2. Because of this, as shown in FIGs. 12A and 12B, when the bottom surface 48T of the recess 48 is supported by the front top surface (support surface) 38, the recess 48 is fitted into the front protrusion 36, and is inserted to the gap 39 between the vertical wall 16 and the lower end of the front surface (guide surface) 34 of the protrusion 31. With this configuration, the dash panel 40 can be positioned in the front-and-rear direction with respect to the front body 10.

As shown in FIG. 12B, when the dash panel 40 is further slid in the slanted downward direction, the gaps between the left and right side surfaces 48L and 48R of the recess 48 and the left and right side surfaces 32L and 32R of the protrusion 31 further become smaller. When the bottom surface 48T of the recess 48 is supported by the front top surface (support surface) 38, the center of the recess 48 approximately coincides with the center of the protrusion 31.

As shown in FIG. 12A, when the dash panel 40 is further slid in the slanted downward direction, the first positioning pin 46 moves further into the first positioning hole 20 of the vertical wall 16. When the bottom surface 48T of the recess 48 is supported by the front top surface (support surface) 38, a root of the first positioning pin 46 having the tapered shape enters the first positioning hole 20, and the dash panel 40 can be positioned in the left-and-right direction.

As described, by sliding the bottom surface 48T of the recess 48 in the slanted downward direction toward the vertical wall 16 while causing the bottom surface 48T to contact the front surface (guide surface) 34 of the protrusion 31, and supporting the bottom surface 48T by the front top surface (support surface) 38, the dash panel 40 can be positioned in the vehicle front-and-rear direction, and in the left-and-right direction with respect to the front body 10.

As shown in FIGs. 12A and 12B, in the state in which the bottom surface 48T of the recess 48 is supported by the front top surface (support surface) 38, the first positioning pin 46 is positioned at a lower part of the first positioning hole 20. In addition, the bolt hole 44 formed on the lower end part 41 of the dash panel 40 is positioned at a slightly lower position than the bolt hole 18 formed on the vertical wall 16.

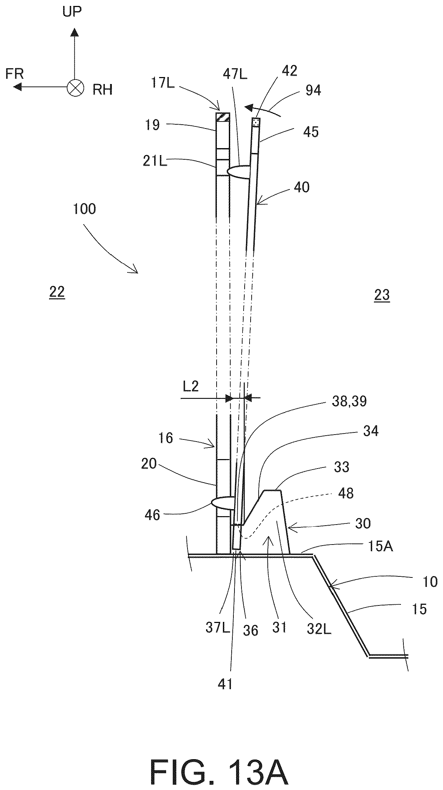

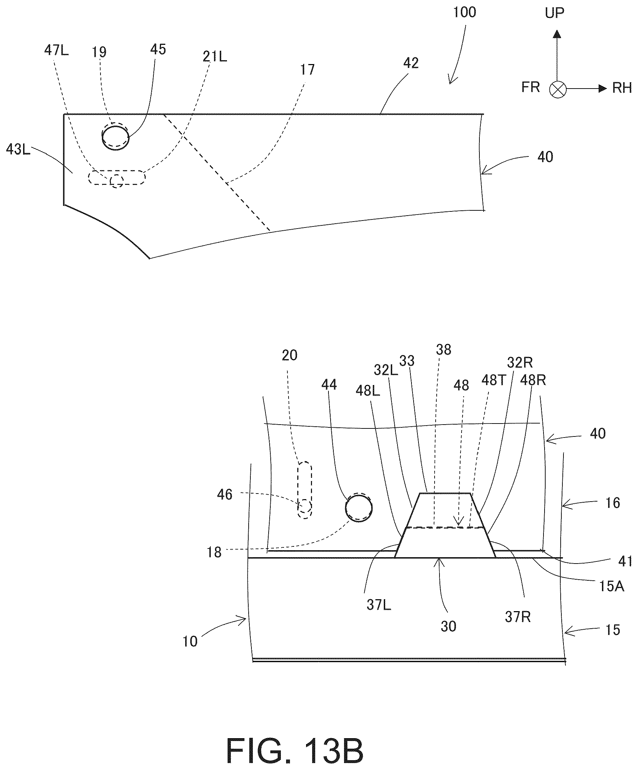

Next, as shown by an arrow 94 in FIG. 13A, in a state in which the bottom surface 48T of the recess 48 of the dash panel 40 is supported by the front top surface (support surface) 38, the upper end part 42 of the dash panel 40 is raised toward the lateral wall 17L. With this process, as shown in FIGs. 13A and 13B, a tip of the second positioning pin 47L having the tapered shape is hooked in the second positioning hole 21L.

In FIGs. 13A to 14, the right side end part 43R, the right second positioning pin 47R, and the right second positioning hole 21R are not shown and are not described, because these members are symmetric in the left-and-right direction with the left side end part 43L, the left second positioning pin 47L, and the left second positioning hole 21L respectively.

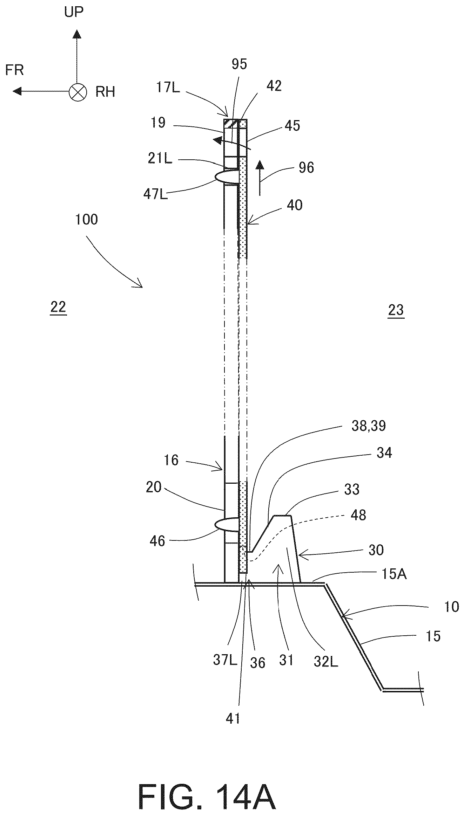

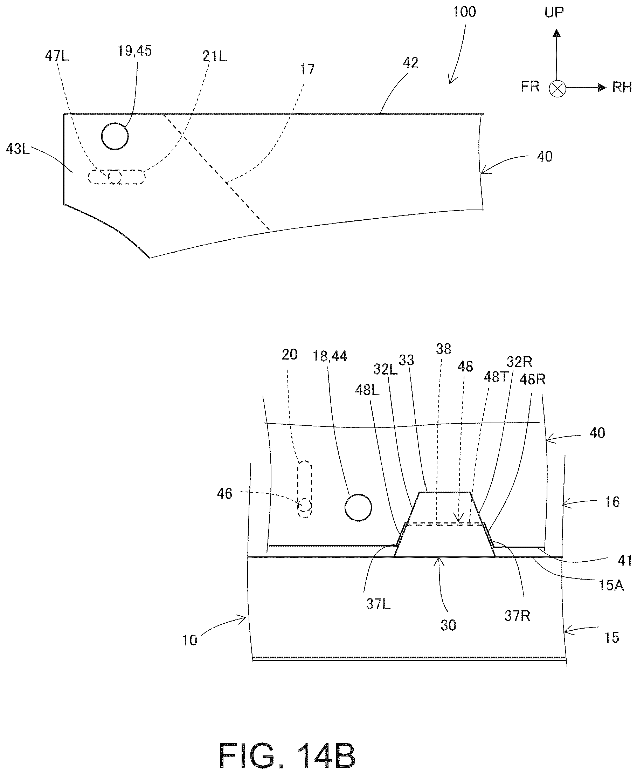

As shown by an arrow 95 in FIG. 14A, when the upper end part 42 of the dash panel 40 is further raised and pressed toward the lateral wall 17L, the second positioning pin 47L having the tapered shape is pressed into the second positioning hole 21L, and, as shown by an arrow 96 in FIG. 14A, the dash panel 40 is moved upward along an outer surface of the tapered shape of the second positioning pin 47L. The bottom surface 48T of the recess 48 moves away from the front top surface (support surface) 38 of the front protrusion 36, and a gap is created between the bottom surface 48T and the front top surface (support surface) 38. With this process, the position in the up-and-down direction of the dash panel 40 with respect to the front body 10 is defined by the second positioning hole 21L and the second positioning pin 47L. When a root of the second positioning pin 47L is inserted into the second positioning hole 21L, the positioning in the up-and-down direction of the dash panel 40 with respect to the front body 10 is completed. When the positioning in the up-and-down direction is completed, as shown in FIG. 14B, the bolt holes 44 and 45 of the dash panel 40, the bolt hole 18 of the vertical wall 16, and the bolt hole 19 of the lateral wall 17L are coaxial with each other.

Then, as shown in FIG. 1, the bolts 25 are inserted through the bolt holes 18, 19, 44, and 45, to attach the dash panel 40 to the vertical wall 16, and the left and right lateral walls 17L and 17R.

As described, in the vehicle front structure 100, the dash panel 40 can be easily positioned in the front-and-rear direction with respect to the front body 10 by simply inserting the recess 48 of the lower end part 41 of the dash panel 40 into the gap 39 between the vertical wall 16 and the protrusion 31.

In addition, in the vehicle front structure 100, the dash panel 50 can be positioned in the front-and-rear direction by fitting the front surface (guide surface) 34 of the protrusion 31 into the recess 48 of the dash panel 40, sliding the bottom surface 48T of the recess 48 in the slanted downward direction toward the vertical wall 16 while causing the bottom surface 48T to contact the front surface (guide surface) 34 in a state in which the upper end part 42 of the dash panel 40 is inclined rearward, and supporting the bottom surface 48T by the front top surface (support surface) 38 of the front protrusion 36. Because of this, it becomes unnecessary to position the dash panel 40 in the front-and-rear direction in a state in which the dash panel 40 is hung, and the positioning in the front-and-rear direction can be easily performed.

Moreover, in the vehicle front structure 100, the dash panel 40 can be positioned in the left-and-right direction with respect to the front body 10 by inserting the first positioning pin 46 into the first positioning hole 20 while sliding the dash panel 40 in the slanted downward direction toward the vertical wall 16. In this manner, in the vehicle front structure 100, the dash panel 40 can be simultaneously positioned in the front-and-rear direction and in the left-and-right direction with respect to the front body 10 by sliding the dash panel 40 in the slanted downward direction toward the vertical wall 16.

Furthermore, in the vehicle front structure 100, after the positioning of the dash panel 40 in the front-and-rear direction and that in the left-and-right direction are performed by sliding the dash panel 40 in the slanted downward direction toward the vertical wall 16 in a state in which the upper end part 42 of the dash panel 40 is inclined rearward, the dash panel 40 can be positioned in the up-and-down direction with respect to the front body 10 by raising the dash panel 40 toward the lateral walls 17L and 17R. Because of this, the positioning in the left-and-right direction, the positioning in the front-and-rear direction, and the positioning in the up-and-down direction can be performed successively, and assembly of the dash panel 40 to the front body 10 can be shortened.

Further, in the vehicle front structure 100, the dash panel 40 can be easily provisionally positioned in the left-and-right direction by fitting the recess 48 of the dash panel 40 into the protrusion 31, and provisionally disposing the recess 48 on the top surface (provisional disposition surface) 33 of the protrusion 31. After the provisional positioning in the left-and-right direction, the dash panel 40 is positioned in the front-and-rear direction by sliding the bottom surface 48T of the recess 48 in the slanted downward direction toward the vertical wall 16 while causing the bottom surface 48T to contact the front surface (guide surface) 34. In this manner, in the vehicle front structure 100, the dash panel 40 can be positioned in the front-and-rear direction with respect to the front body 10 in a state in which the dash panel 40 is provisionally positioned in the left-and-right direction with respect to the front body 10. In addition, the state in which the dash panel 40 is provisionally positioned in the left-and-right direction with respect to the front body 10, and positioned in the front-and-rear direction with respect to the front body 10 can be easily maintained.

In addition, in the vehicle front structure 100, the dash panel 40 which is made of a resin can be attached through a simple method to the front body 10 which is a cast product which is integrally cast with a metal.

Moreover, the protrusion 31 and the front protrusion 36 of the guide 30 of the vehicle front structure 100 respectively comprise the left and right side surfaces 32L and 32R, and the left and right front side surfaces 37L and 37R, which are inclined toward the outer side in the vehicle width direction toward the lower side, and the recess 48 of the dash panel 40 is a notch of a trapezoidal shape. Because of this, when the protrusion 31 or the front protrusion 36 is fitted into the recess 48 of the dash panel 40, the precision of the provisional positioning in the left-and-right direction of the dash panel 40 with respect to the front body 10 can be improved.

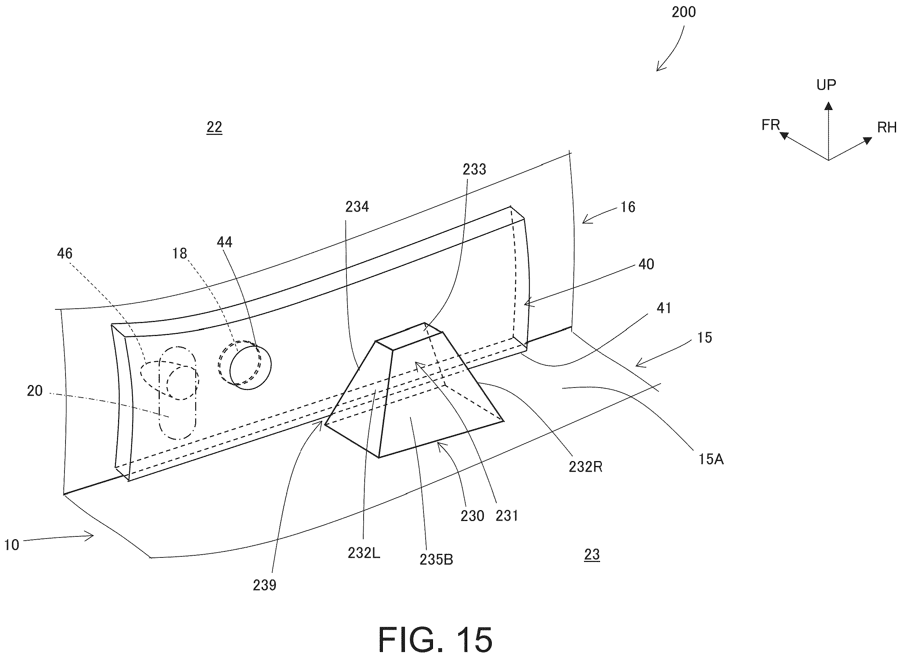

Next, a vehicle front structure 200 according to a second embodiment of the present disclosure will be described with reference to FIGs. 15 to 16B. Elements identical with those in the vehicle front structure 100 described above with reference to FIGs. 1 to 14B will be assigned the same reference numerals, and will not be described again.

As shown in FIG. 15, the vehicle front structure 200 comprises a guide 230 in place of the guide 30 of the vehicle front structure 100. In addition, in the vehicle front structure 200, the recess 48 is not provided on the lower end part 41 of the dash panel 40. The other elements of the vehicle front structure 200 are identical with those of the vehicle front structure 100.

As shown in FIG. 15, the guide 230 is a protrusion 231 having a trapezoidal cross-sectional shape, and comprising left and right side surfaces 232L and 232R, a top surface 233, a rear surface 235B, and a front surface 234. The left and right side surfaces 232L and 232R are inclined toward the outer side in the vehicle width direction toward the lower side. The top surface 233 is a surface extending from an upper end of the front surface 234 toward a rear side, and is a provisional disposition surface on which the lower end part 41 of the dash panel 40 can be provisionally disposed. The front surface 234 is a guide surface which opposes the vertical wall 16 in the vehicle front-and-rear direction, and which is inclined in a slanted downward direction toward the vertical wall 16. The guide 230 is disposed on the upper surface 15A of the cross member 15 at a rear side in relation to the vertical wall 16, with a gap 239 formed between the guide 230 and the vertical wall 16. A length in the vehicle front-and-rear direction of the gap 239 may be a length which allows insertion of the lower end part 41 of the dash panel 40, and may be equal to the thickness of the lower end part 41, or slightly smaller than the thickness of the lower end part 41.

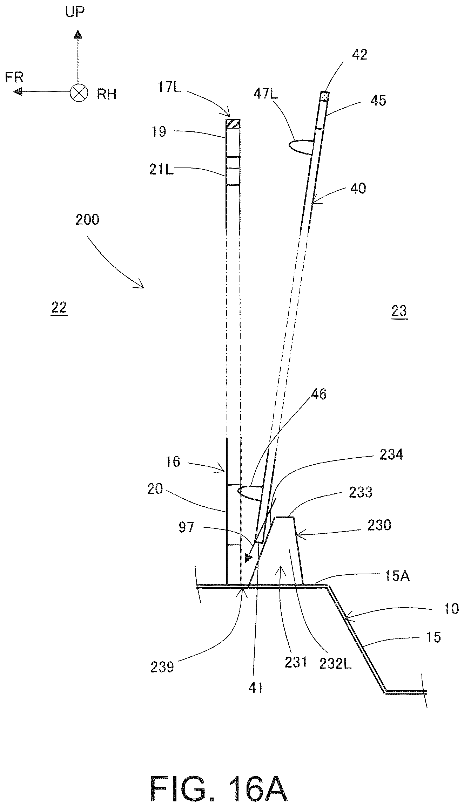

Next, an assembly process for assembling the dash panel 40 to the front body 10 in the vehicle front structure 200 will be described with reference to FIGs. 16A to 16C.

As shown by an arrow 97 in FIG. 16A, the lower end part 41 of the dash panel 40 is slid in the slanted downward direction toward the vertical wall 16 while causing the lower end part 41 to contact the front surface (guide surface) 234 in a state in which the upper end part 42 of the dash panel 40 is inclined rearward. In this process, the tip of the first positioning pin 46 having the tapered shape and provided on the lower end part 41 of the dash panel 40 enters the first positioning hole 20 of the vertical wall 16.

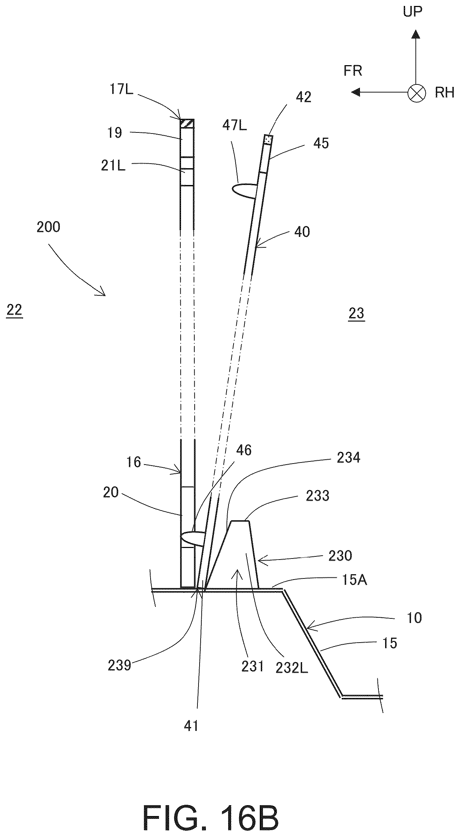

As shown in FIG. 16B, the dash panel 40 is further slid in the slanted downward direction, to insert the lower end part 41 of the dash panel 40 into the gap 239 between the vertical wall 16 and the guide 230. The lower end part 41 of the dash panel 40 is caused to contact the upper surface 15A of the cross member 15 in the gap 239. In this process, the tip of the first positioning pin 46 further moves into the first positioning hole 20 of the vertical wall 16. With this process, the dash panel 40 can be positioned in the front-and-rear direction, and in the left-and-right direction with respect to the front body 10.

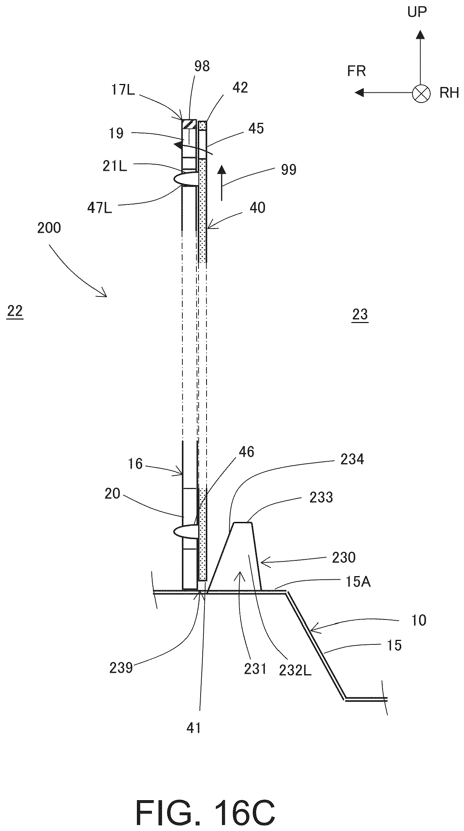

Next, as shown by an arrow 98 in FIG. 16C, the upper end part 42 of the dash panel 40 is raised toward the lateral wall 17L in a state in which the lower end part 41 of the dash panel 40 is supported by the upper surface 15A of the cross member 15. With this process, the tip of the second positioning pin 47L having the tapered shape enters the second positioning hole 21L. Similar to the above description with reference to FIGs. 14A and 14B, when the upper end part 42 of the dash panel 40 is further raised and pressed onto the lateral wall 17L, the second positioning pin 47L is pressed into the second positioning hole 21L. As shown by an arrow 99 in FIG. 16C, with this process, the dash panel 40 is moved upward along an outer surface of the tapered shape of the second positioning pin 47L. The lower end part 41 of the dash panel 40 moves away from the upper surface 15A of the cross member 15, and a gap is created between the lower end part 41 and the upper surface 15A. In this manner, the position in the up-and-down direction of the dash panel 40 with respect to the front body 10 is defined by the second positioning hole 21L and the second positioning pin 47L. When the root of the second positioning pin 47L is inserted into the second positioning hole 21L, the positioning in the up-and-down direction of the dash panel 40 with respect to the front body 10 is completed.

Similar to the vehicle front structure 100, in the vehicle front structure 200, the dash panel 40 can be easily positioned in the front-and-rear direction with respect to the front body 10 by simply inserting the lower end part 41 of the dash panel 40 into the gap 239 between the vertical wall 16 and the protrusion 231. In addition, similar to the vehicle front structure 100, in the vehicle front structure 200, the dash panel 40 can be positioned in the front-and-rear direction, in the left-and-right direction, and in the up-and-down direction with respect to the front body 10, through a simple method.

In the vehicle front structure 200 also, similar to the description with reference to FIGs. 10A and 10B, when the dash panel 40 is assembled to the front body 10, the lower end part 41 of the dash panel 40 may be provisionally disposed on the top surface 233 (provisional disposition surface).

In addition, similar to the vehicle front structure 100, in the vehicle front structure 200, the recess 48 may be provided on the lower end part 41 of the dash panel 40, and the bottom surface 48T of the recess 48 may be provisionally disposed on the top surface 233 (provisional disposition surface). Further, the bottom surface 48T of the recess 48 may be slid in the slanted downward direction toward the vertical wall 16 while causing the bottom surface 48T to contact the front surface (guide surface) 233, to thereby position the dash panel 40 in the front-and-rear direction.

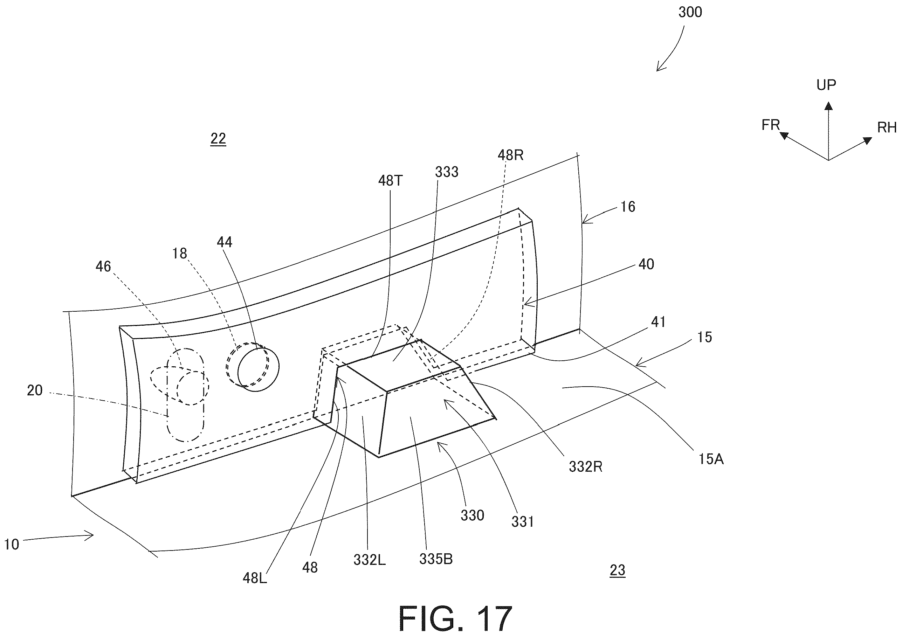

Next, a vehicle front structure 300 according to an alternative configuration of the present disclosure will be described with reference to FIGs. 17 to 19. Elements identical with those of the vehicle front structure 100 described above with reference to FIGs. 1 to 14B will be assigned the same reference numerals, and will not be described again.

The vehicle front structure 300 comprises a guide 330 in place of the guide 30 of the vehicle front structure 100. Unlike the vehicle front structures 100 and 200, the vehicle front structure 300 does not have the gaps 39 and 239 between the vertical wall 16 and the protrusions 31 and 231. The other elements of the vehicle front structure 300 are identical with those of the vehicle front structure 100.

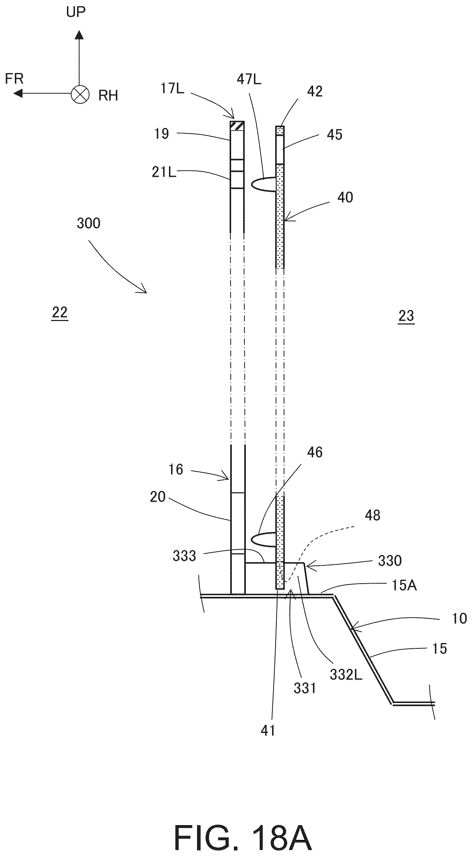

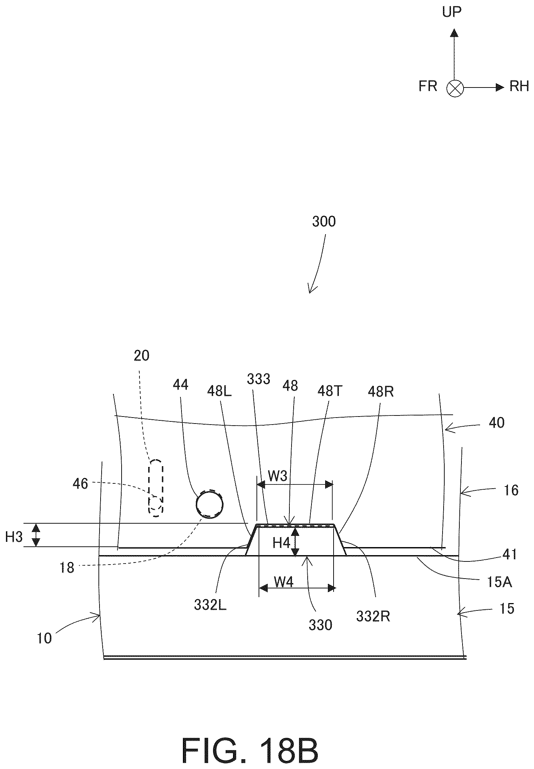

As shown in FIG. 17, the guide 330 is a projection 331 having a trapezoidal cross-sectional shape, and comprising left and right side surfaces 332L and 332R, a top surface 333, and a rear surface 335B. The left and right side surfaces 332L and 332R are inclined toward the outer side in the vehicle width direction toward the lower side. The projection 331 is attached to the upper surface 15A of the cross member 15, and to a rear surface of the vertical wall 16. As shown in FIG. 18B, a width of the top surface 333 of the projection 331 is W4, which is slightly shorter than the width W3 of the recess 48 of the dash panel 40. Further, a height of the top surface 333 is H4, which is higher than the depth dimension H3 of the recess 48. Therefore, the projection 331 can be fitted into the recess 48.

Next, an assembly process for assembling the dash panel 40 to the front body 10 in the vehicle front structure 300 will be described with reference to FIGs. 18A to 19.

As shown in FIGs. 18A and 18B, the bottom surface 48T of the recess 48 is provisionally disposed on the top surface 333 of the projection 331. With this process, the dash panel 40 can be positioned in the left-and-right direction with respect to the front body 10.

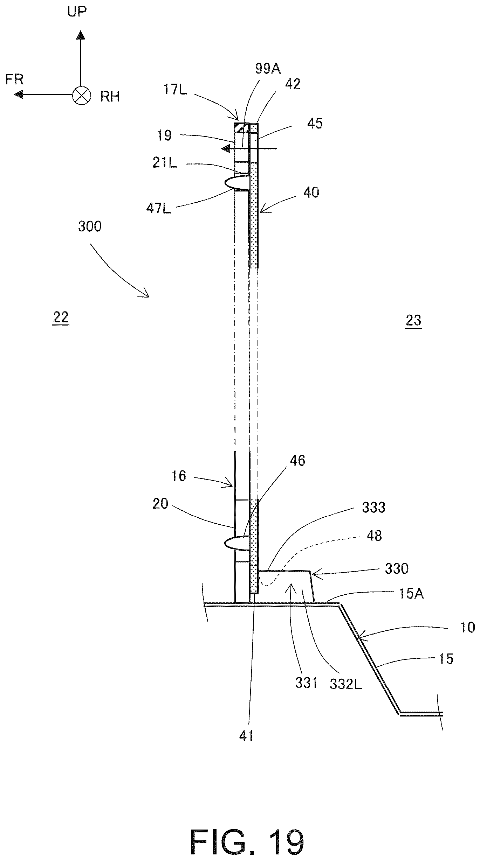

Then, as shown by an arrow 99A in FIG. 19, the bottom surface 48T of the recess 48 of the dash panel 40 is slid toward the front side along the top surface 333 of the projection 331. With this process, the first positioning pin 46 and the second positioning pin 47L are respectively inserted into the first positioning hole 20 and the second positioning hole 21L, and the dash panel can thus be positioned in the left-and-right direction and in the up-and-down direction.

In the vehicle front structure 300, the dash panel 40 can be assembled to the front body 10 in a state in which the dash panel 40 is positioned in the left-and-right direction with respect to the front body 10. Because of this, the dash panel 40 can be easily assembled to the front body 10.

Similar to the vehicle front structures 100 and 200 described above, a configuration may be employed in which, when the second positioning pin 47L is inserted into the second positioning hole 21L, the dash panel 40 is moved upward along the tapered surface of the second positioning pin 47L, and a gap is created between the bottom surface 48T of the recess 48 and the top surface 333.

In the description above, the guide 30 is described as being disposed in the region near the center in the vehicle width direction of the cross member 15, but the present disclosure is not limited to such a configuration, and the guide 30 may be disposed at a position which is moved to the left or to the right from the center in the vehicle width direction.

In addition, the protrusions 31 and 231, the projection 331, and the front protrusion 36 are described as having a trapezoidal cross-sectional shape, but the shape may be a shape other than the trapezoidal cross section so long as these elements can be fitted in the recess 48 of the dash panel 40, and may be, for example, a rectangular cross-sectional shape or a square cross-sectional shape. In this case, the recess 48 of the dash panel 40 does not have the trapezoidal shape, and may be a rectangular notch or a square notch.

Moreover, in the above description, the front body 10 is described as a cast product which is integrally cast from a metal such as aluminum, but the present disclosure is not limited to such a configuration. For example, the left and right front side members 12L and 12R, the left and right side panels 11L and 11R, the left and right wheel wells 14L and 14R, the cross member 15, the vertical wall 16, and the left and right lateral walls 17L and 17R may be manufactured as separate components, and may be integrally assembled through welding, bolt fastening, or the like, and the guide 30 may be attached on the upper surface 15A of the cross member 15 by welding or the like.

In addition, it is sufficient that the guide 30 is provided at the upper part of the cross member 15, and a configuration may alternatively be employed in which a bracket is provided on the upper surface 15A, and the guide 30 is attached to the bracket.

Further, in the above description, the dash panel 40 is described as being made of a resin, but the material is not limited to the resin, and may alternatively be a metal such as aluminum or a steel plate.

In addition, in the above description, a configuration is described in which, when the second positioning pin 47L is pressed into the second positioning hole 21L, a gap is created between the bottom surface 48T of the recess 48 of the dash panel 40 and the front top surface (support surface) 38 of the front protrusion 36, and the position in the up-and-down direction of the dash panel 40 with respect to the front body 10 is defined by the second positioning hole 21L and the second positioning pin 47L, but the present disclosure is not limited to such a configuration. For example, a configuration may alternatively be employed in which, when the second positioning pin 47L is pressed in to the second positioning hole 21L, the position in the up-and-down direction of the dash panel 40 with respect to the front body 10 is defined by the second positioning hole 21L and the second positioning pin 47L in a state in which the bottom surface 48T of the recess 48 of the dash panel 40 is maintained in the contacted state with the front top surface (support surface) 38 of the front protrusion 36.

## Claims

1. A vehicle front structure (100) comprising:
a cross member (15) that is disposed between a power unit compartment (22) at a front part of a vehicle and a vehicle cabin (23), and that extends in a vehicle width direction;
a vertical wall (16) that is disposed upright at an upper part of the cross member (15);
a dash panel (40) that is attached to the vertical wall (16), and that partitions between the power unit compartment (22) and the vehicle cabin (23); and
a guide (30) that is provided at an upper part of the cross member (15) and at a rear side in relation to the vertical wall (16), wherein
the guide (30) includes a protrusion (31) which is disposed with a gap (39), in which a lower end part (41) of the dash panel (40) can be disposed, between the guide (30) and the vertical wall (16).

2. The vehicle front structure (100) according to claim 1, wherein
a front surface (34) of the protrusion (31) is a guide surface (34) which opposes the vertical wall (16) in a vehicle front-and-rear direction, and which is inclined in a slanted downward direction toward the vertical wall (16).

3. The vehicle front structure (100) according to claim 1, wherein
the dash panel (40) comprises, at the lower end part (41), a recess (48) into which the protrusion (31) is fitted, and
a depth dimension of the recess (48) is smaller than a height of the protrusion (31).

4. The vehicle front structure (100) according to claim 2, wherein
the dash panel (40) comprises, at the lower end part (41), a recess (48) into which the protrusion (31) including the guide surface (34) is fitted, and
a depth dimension of the recess (48) is smaller than a height of a lower end of the guide surface (34).

5. The vehicle front structure (100) according to claim 4, wherein
a top surface (33) of the protrusion (31) is a provisional disposition surface which extends from an upper end of the guide surface (34) toward a rear side,
the provisional disposition surface is configured to be fitted into the recess (48), and
a height of the provisional disposition surface is greater than a depth dimension of the recess (48).

6. The vehicle front structure (100) according to claim 4, wherein
the guide (30) includes a front protrusion (36) which is disposed between the protrusion (31) and the vertical wall (16), and which is fitted into the recess (48), and
a height of the front protrusion (36) is lower than a height of the protrusion (31), and higher than the depth dimension of the recess (48).

7. The vehicle front structure (100) according to claim 6, wherein
the front protrusion (36) includes a support surface (38) which extends from the lower end of the guide surface (34) toward the vertical wall (16), and which can support the recess (48) of the dash panel (40) between the vertical wall (16) and the guide surface (34), and
a height of the support surface (38) is equal to the height of the lower end of the guide surface (34).

8. The vehicle front structure (100) according to claim 6 or 7, wherein
the protrusion (31) includes left and right side surfaces (32L, 32R) which are inclined toward an outer side in the vehicle width direction toward a lower side,
the front protrusion (36) includes left and right front side surfaces (37L, 37R) which are respectively continuous with the left and right side surfaces (32L, 32R), and
the recess (48) of the dash panel (40) is a notch of a trapezoidal shape into which the left and right side surfaces (32L, 32R), and the left and right front side surfaces (37L, 37R) are fitted.

9. The vehicle front structure (100) according to any one of claims 1 to 7, further comprising:
left and right side panels (11L, 11R) that are respectively connected to left and right side end parts of the cross member (15); and
left and right lateral walls (17L, 17R) that are disposed upright respectively on inner surfaces of the left and right side panels (11L, 11R), wherein
a first positioning hole (20) which defines a position in the vehicle width direction of the dash panel (40) is formed on the vertical wall (16),
second positioning holes (21L, 21R) which define a position in a vehicle up-and-down direction of the dash panel (40) are formed respectively on the left and right lateral walls (17L, 17R) at upper parts thereof,
the dash panel (40) comprises a first positioning pin (46) which is disposed on the lower end part (41), and which is inserted into the first positioning hole (20), and left and right second positioning pins (47L, 47R) which are respectively disposed on left and right side end parts (43L, 43R) at upper parts thereof, and which are respectively inserted into the second positioning holes (21L, 21R), and
the first positioning hole (20) is an elongated hole which is long in an up-and-down direction, and the second positioning holes (21L, 21R) are elongated holes which are long in a left-and-right direction.

10. The vehicle front structure (100) according to any one of claims 1 to 7, wherein
the cross member (15), the vertical wall (16), and the guide (30) are integrally cast.

11. A panel assembly method of assembling a dash panel (40) which partitions a power unit compartment (22) at a front part of a vehicle and a vehicle cabin (23) to a front body (10) comprising a cross member (15) which is disposed between the power unit compartment (22) and the vehicle cabin (23), and which extends in a vehicle width direction, a vertical wall (16) which is disposed upright at an upper part of the cross member (15), and a guide (30) which is provided at an upper part of the cross member (15) and at a rear side in relation to the vertical wall (16), wherein
the guide (30) includes a protrusion (31) which is disposed with a gap (39), in which a lower end part (41) of the dash panel (40) can be disposed, between the guide (30) and the vertical wall (16), and
the dash panel (40) is positioned in a front-and-rear direction with respect to the front body (10) by inserting the lower end part (41) of the dash panel (40) into the gap (39).

12. The panel assembly method according to claim 11, wherein
the dash panel (40) comprises, at the lower end part (41), a recess (48) into which the protrusion (31) is fitted,
a front surface (34) of the protrusion (31) is a guide surface (34) which opposes the vertical wall (16) in a vehicle front-and-rear direction, which is inclined in a slanted downward direction toward the vertical wall (16), and which is fitted into the recess (48),
a depth dimension of the recess (48) is smaller than a height of a lower end of the guide surface (34),
the guide (30) includes a front protrusion (36) which is disposed between the protrusion (31) and the vertical wall (16), and which is fitted into the recess (48),
the front protrusion (36) includes a support surface (38) which extends from the lower end of the guide surface (34) toward the vertical wall (16), and which can support the recess (48) of the dash panel (40) between the vertical wall (16) and the guide surface (34), and a height of the support surface (38) is equal to the height of the lower end of the guide surface (34), and
the dash panel (40) is positioned in the front-and-rear direction with respect to the front body (10) by sliding a bottom surface of the recess (48) in a slanted downward direction toward the vertical wall (16) while causing the bottom surface of the recess (48) to contact the guide surface (34) in a state in which an upper part of the dash panel (40) is inclined rearward, and then supporting the bottom surface of the recess (48) by the support surface (38).

13. The panel assembly method according to claim 11 or 12, wherein
the dash panel (40) comprises a recess (48) into which the protrusion (31) is fitted, and
the dash panel (40) is provisionally positioned in a left-and-right direction with respect to the front body (10) by fitting the recess (48) of the dash panel (40) into the protrusion (31), and provisionally disposing a bottom surface of the recess (48) of the dash panel (40) on a top surface (33) of the protrusion (31).

14. The panel assembly method according to claim 12, wherein
the front body (10) further comprises left and right side panels (11L, 11R) which are respectively connected to left and right ends of the cross member (15), and left and right lateral walls (17L, 17R) which are disposed upright respectively on inner surfaces of the left and right side panels (11L, 11R),
a first positioning hole (20) which defines a position in the vehicle width direction of the dash panel (40) is formed on the vertical wall (16),
second positioning holes (21L, 21R) which define a position in a vehicle up-and-down direction of the dash panel (40) are formed respectively on the left and right lateral walls (17L, 17R) at upper parts thereof,
the dash panel (40) comprises a first positioning pin (46) which is disposed on the lower end part (41), and which is inserted into the first positioning hole (20), and left and right second positioning pins (47L, 47R) which are respectively disposed on left and right side end parts (43L, 43R) at upper parts thereof, and which are respectively inserted into the second positioning holes (21L, 21R),
the first positioning hole (20) is an elongated hole which is long in an up-and-down direction, and the second positioning holes (21L, 21R) are elongated holes which are long in a left-and-right direction,
the dash panel (40) is positioned in the left-and-right direction with respect to the front body (10) by causing the bottom surface of the recess (48) of the dash panel (40) to contact the guide surface (34) in a state in which an upper end part of the dash panel (40) is inclined rearward, sliding the dash panel (40) in a slanted downward direction toward the vertical wall (16), and inserting the first positioning pin (46) into the first positioning hole (20),
the dash panel (40) is then positioned in the front-and-rear direction with respect to the front body (10) by supporting the bottom surface of the recess (48) by the support surface (38), and
the dash panel (40) is then positioned in the up-and-down direction with respect to the front body (10) by raising the upper end part of the dash panel (10) toward the lateral wall (16) in a state in which the bottom surface of the recess (48) is supported by the support surface (38), and inserting the left and right second positioning pins (47L, 47R) respectively into the second positioning holes (21L, 21R).
